# EUROPEAN PATENT APPLICATION

(11) **EP 4 814 920 A1**
(43) Date of publication of application: **30.09.2026**
(21) Application number: 26156494.2
(22) Date of filing: 05.02.2026
(51) Int. Cl.: G08G 1/0962, B60K 35/22, B60K 35/28, B60K 35/29, B60K 35/60, B60K 35/81, G06V 20/58

(54) **INFORMATION DISPLAY CONTROL SYSTEM AND METHOD OF DISPLAYING INFORMATION**

(30) Priority: 28.03.2025 JP 2025055944
(71) Applicant: MAZDA MOTOR CORPORATION, Hiroshima 730-8670 (JP)
(72) Inventor: Sato, Ryo, Aki-gun, Hiroshima (JP); Moritani, Takayuki, Aki-gun, Hiroshima (JP); Koyama, Takahiro, Aki-gun, Hiroshima (JP); Sakamoto, Yudai, Aki-gun, Hiroshima (JP); Obayashi, Haruki, Aki-gun, Hiroshima (JP)
(74) Representative: Müller-Boré & Partner Patentanwälte PartG mbB

(57) **Abstract**

An information display control system 1 includes: a vehicle exterior camera 11; vehicle behavior sensors 10 (a vehicle speed sensor 13 and a steering angle sensor 14); a control unit 20 that acquires vehicle entry prohibition information 6 on the basis of an identified vehicle entry prohibition sign 3a when the vehicle entry prohibition sign 3a is identified; and a display unit 30 that displays the vehicle entry prohibition information 6. The control unit 20 determines whether a vehicle 100 enters a travel road 2 on the basis of positional information of the vehicle entry prohibition sign 3a with respect to the vehicle 100 estimated from the image data and vehicle behavior information acquired from the vehicle behavior sensors 10 when the vehicle entry prohibition information 6 is displayed on the display unit 30, and terminates display of the vehicle entry prohibition information 6 by the display unit 30 when making a negative determination.

## Description

### [Technical Field]

The present invention relates to an information display control system and, in particularly, to an information display control system for displaying traffic sign information to a driver. The present invention also relates to a method of displaying information.

### [Background Art]

A traffic sign recognition system mounted on a vehicle identifies a traffic sign (for example, a vehicle entry prohibition sign) in image data of the outside of the vehicle captured by a camera, and displays the identified traffic sign on a display unit in order to notify a driver thereof. For example, it is described in Japanese Patent No. 6,394,921 and Japanese Patent No. 7,509,191 that, when the vehicle entry prohibition sign is identified from the camera image data, vehicle entry prohibition information is displayed on the display unit.

### [Citation List]

Japanese Patent No. 6,394,921
Japanese Patent No. 7,509,191

### [Summary of Invention]

### [Technical Problem]

However, in Japanese Patent No. 6,394,921 and Japanese Patent No. 7,509,191, it is not clearly described at which timing display of the vehicle entry prohibition information, which is displayed on the display unit, is terminated once when the vehicle does not enter a travel road on which the identified vehicle entry prohibition sign is installed. For example, it is described in Japanese Patent No. 6,394,921 that the display is continuously provided until passing of the sign, and it is described in Japanese Patent No. 7,509,191 that the display is terminated when an operation to terminate processing is executed.

For example, such a case is considered that, when the vehicle enters an intersection, the vehicle entry prohibition sign is installed or provided for a vehicle entry prohibition road in front of the vehicle. In this case, even when the vehicle does not enter the vehicle entry prohibition road in front, the vehicle entry prohibition information is displayed on the display unit of the vehicle. At this time, for example, such a configuration is considered that, when the vehicle attempts to turn right at the intersection and a steering wheel is turned to the right, the display of the vehicle entry prohibition information is terminated on the basis of a detection signal from a steering angle sensor.

However, there may be a case where, after changing a lane from a left lane to a right lane in front of the intersection, the vehicle accidentally enters the vehicle entry prohibition road in front of the vehicle. In this case, in the above configuration, the display of the vehicle entry prohibition information is terminated at a time point of changing the lane. As described above, there has been a problem that the vehicle entry prohibition information cannot be displayed only for an appropriate period in some cases.

The invention has been made to solve the problem as described above, and an object thereof is to provide an information display control system capable of displaying vehicle entry prohibition information only for an appropriate period.

### [Solution to Problem]

The above-described problem is solved by the invention as defined in independent claims. Embodiments of the present invention are defined in dependent claims. For example, an information display control system for a vehicle includes: an imaging unit that acquires image data (or footage) acquired by imaging at least front of the vehicle; one or more vehicle behavior sensors that detect vehicle behavior information indicating behavior of the vehicle; a control unit that acquires vehicle entry prohibition information (or information for prohibiting a vehicle from entering a road) on the basis of an identified vehicle entry prohibition sign when the vehicle entry prohibition sign installed on a travel road is identified from the acquired image data; and a display unit that displays the vehicle entry prohibition information acquired by the control unit. When the vehicle entry prohibition information is displayed on the display unit, the control unit determines whether the vehicle enters the travel road on the basis of positional information of the vehicle entry prohibition sign with respect to the vehicle and the vehicle behavior information acquired from the vehicle behavior sensor. The positional information of the vehicle entry prohibition sign with respect to the vehicle is estimated from the image data, e.g., by the control unit. The control unit terminates display of the vehicle entry prohibition information by the display unit when making a negative determination or when the vehicle does not enter the travel road on which the vehicle entry prohibition sign is installed or provided.

According to the present invention configured as described above, in the case where it is determined that the vehicle does not enter the vehicle entry prohibition road (or a road which the vehicle is prohibited from entering) on the basis of the positional information of the vehicle entry prohibition sign and the vehicle behavior information when the vehicle entry prohibition information is displayed on the display unit on the basis of the vehicle entry prohibition sign, the display of the vehicle entry prohibition information can be terminated. Accordingly, in the invention, the vehicle entry prohibition information can be displayed only for an appropriate period.

In an embodiment, for example, the vehicle behavior sensors at least include a vehicle speed sensor and a steering angle sensor. According to the present embodiment configured as described above, it is possible to easily and accurately estimate the behavior of the vehicle with respect to the vehicle entry prohibition sign by detection signals of the vehicle speed sensor and the steering angle sensor.

In an embodiment, for example, the control unit calculates a turning angle at which the vehicle has turned since predetermined time on the basis of a vehicle speed detected by the vehicle speed sensor and a steering angle detected by the steering angle sensor, and makes a negative determination when the turning angle is equal to or greater than a predetermined turning angle or when a direction of the vehicle with respect to the vehicle entry prohibition sign is equal to or greater than a predetermined angle. According to the present embodiment configured as described above, it is possible to easily and accurately estimate a posture of the vehicle with respect to the vehicle entry prohibition sign.

In an embodiment, for example, the predetermined time is time at which a direction indicator of the vehicle is operated, time at which the vehicle approaches the vehicle entry prohibition sign to a predetermined distance, or time at which the vehicle entry prohibition information is displayed on the display unit. According to the present embodiment configured as described above, it is possible to estimate a posture change with respect to the vehicle entry prohibition sign after the vehicle approaches the vehicle entry prohibition sign to a certain extent.

In an embodiment, for example, when determining that the vehicle has approached the vehicle entry prohibition sign to a predetermined distance on the basis of the image data, the control unit displays the vehicle entry prohibition information on the display unit. According to the present embodiment configured as described above, when the vehicle entry prohibition sign is approached to the predetermined distance, the display of the vehicle entry prohibition information can be started to notify a driver thereof in advance.

For example, an information display control system for a vehicle includes: an imaging unit that acquires image data acquired by imaging at least front of the vehicle; one or more vehicle behavior sensors that detect vehicle behavior information indicating behavior of the vehicle; a control unit that acquires vehicle entry prohibition information on the basis of an identified vehicle entry prohibition sign when the vehicle entry prohibition sign installed on a travel road is identified from the acquired image data; and a display unit that displays the vehicle entry prohibition information acquired by the control unit. The control unit may terminate display of the vehicle entry prohibition information by the display unit when a turning angle at which the vehicle has turned since predetermined time is equal to or greater than a predetermined turning angle or when a direction of the vehicle with respect to the vehicle entry prohibition sign is equal to or greater than a predetermined angle. According to this example, the vehicle entry prohibition information can be displayed only for an appropriate period.

### [Advantageous Effect]

According to the information display control system in the invention, it is possible to display the vehicle entry prohibition information only for the appropriate period.

### [Brief Description of Drawings]

[FIG. 1] FIG. 1 is a block diagram of an information display control system according to an embodiment of the invention.
[FIG. 2] FIG. 2 is a view illustrating traffic sign display control according to the embodiment of the invention.
[FIG. 3] FIG. 3 is camera image data at the time of entering an intersection where a vehicle entry prohibition sign is installed according to the embodiment of the invention.
[FIG. 4] FIG. 4 includes views illustrating a sign display unit in a display unit according to the embodiment of the invention.
[FIG. 5] FIG.5 is a view illustrating the sign display unit in the display unit according to the embodiment of the invention.
[FIG. 6] FIG. 6 is a flowchart of information display control according to the embodiment of the invention.

### [Description of Embodiments]

### [System Configuration]

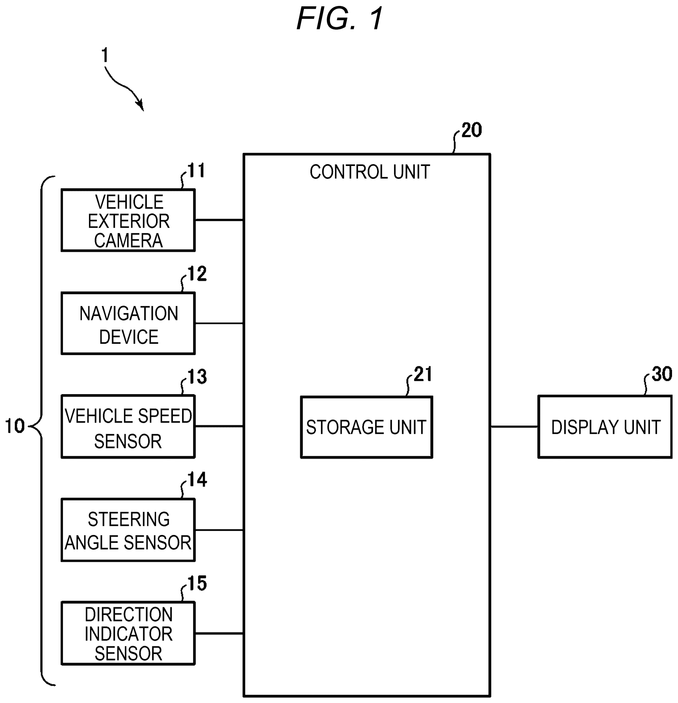

Hereinafter, an information display control system according to an embodiment of the invention will be described with reference to the accompanying drawings. FIG. 1 is a block diagram of the information display control system. An information display control system 1 according to the embodiment of the invention is mounted on a vehicle 100, and is configured to display vehicle entry prohibition information on an in-vehicle display unit 30.

As illustrated in FIG. 1, the information display control system 1 includes one or more vehicle behavior sensors 10 including one or a plurality of sensors, a control unit 20, and the display unit 30. For example, the vehicle behavior sensors 10 includes a vehicle exterior camera 11 as an imaging unit, a navigation device 12, a vehicle speed sensor 13, a steering angle sensor 14, a direction indicator sensor 15, and the like. The vehicle exterior camera 11 captures or constantly captures an image of a surrounding environment in front and/or on sides of the vehicle 100, and provides acquired image data to the control unit 20.

For example, the navigation device 12 includes a positioning device such as a GPS sensor, and specifies a position of the vehicle 100 on a map with reference to map information stored in a storage unit outside or inside the vehicle 100. The map information may include: traffic sign information indicating a position and a type (for example, speed limit, stop, no entry of vehicle, or the like) of a traffic sign installed along a travel road; and travel road information indicating a type (a road type, a road grade, or the like) and a structure of the travel road.

The navigation device 12 provides, as navigation information, positional information of the vehicle 100 and the map information (traffic sign information and travel road information) to the control unit 20. Based on the positional information and the map information, the control unit 20 can specify a travel position of the vehicle 100 on the map, the type and the structure of the travel road, the traffic sign around the vehicle, and the like.

The vehicle speed sensor 13 provides a signal (a vehicle speed signal) indicating a vehicle speed of the vehicle 100 to the control unit 20. The steering angle sensor 14 provides a signal (a steering angle signal) indicating a rotation angle (a steering angle) of a steering wheel of the vehicle 100 to the control unit 20.

When receiving the vehicle speed signal and the steering angle signal, the control unit 20 integrates these signals and can thereby calculate a cumulative turning angle of the vehicle 100 from predetermined time. For example, when the vehicle 100 turns right at an intersection from a currently traveling main road, the control unit 20 can calculate, from these signals, the turning angle at which the vehicle 100 turns with respect to the main road. The direction indicator sensor 15 provides an operation position (a right turn instruction position or a left turn instruction position) of a direction indicator (a blinker) to the control unit 20.

The control unit 20 may be a computer device that includes a processor, a storage unit 21 (RAM, ROM, and the like) storing various programs and databases, an input/output device for electrical signals, and the like. Based on the signal(s) received from the vehicle behavior sensor(s) 10, the control unit 20 outputs a display command signal to the display unit 30. The storage unit 21 stores traffic sign data on the traffic signs (including an auxiliary sign).

For example, when receiving the navigation information from the navigation device 12, the control unit 20 stores, as travel history data, a past travel route, which has been traveled by the vehicle 100 within a predetermined period, on the map in the storage unit 21. In this way, the control unit 20 can specify the route traveled by the vehicle 100 by referring to the travel history data.

The display unit 30 is provided in the vehicle and provides various types of information to the driver on the basis of the display command signal from the control unit 20. The display unit 30 is, for example, a head-up display (HUD).

### [Overview of Traffic Sign Display Control]

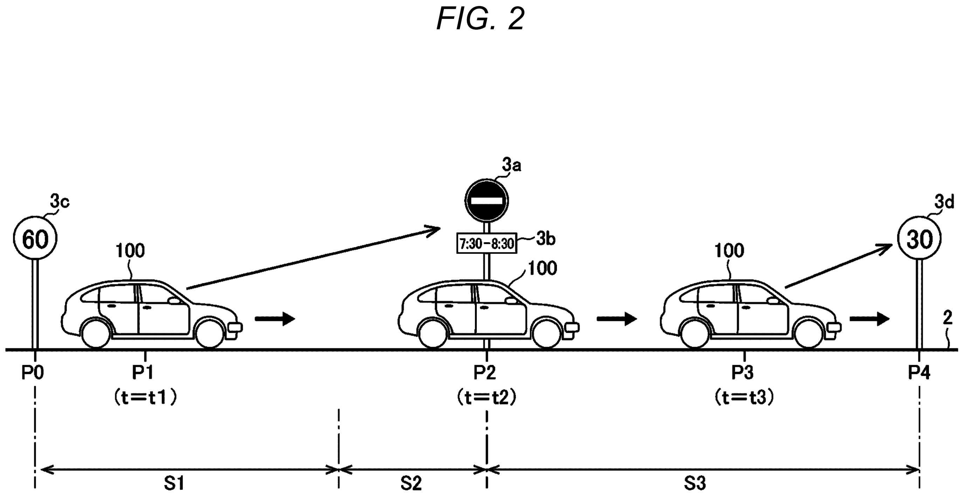

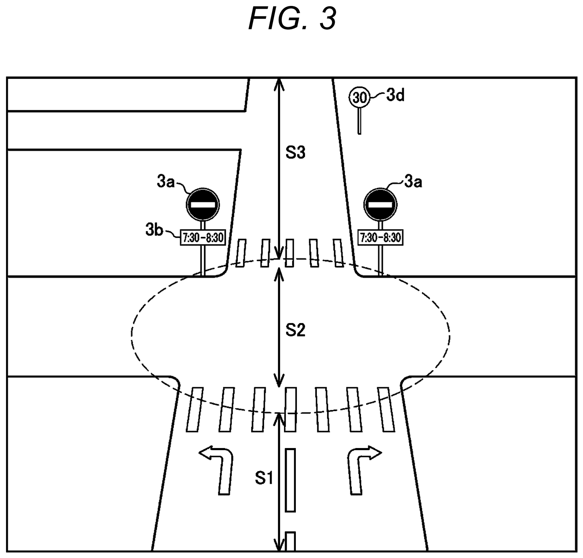

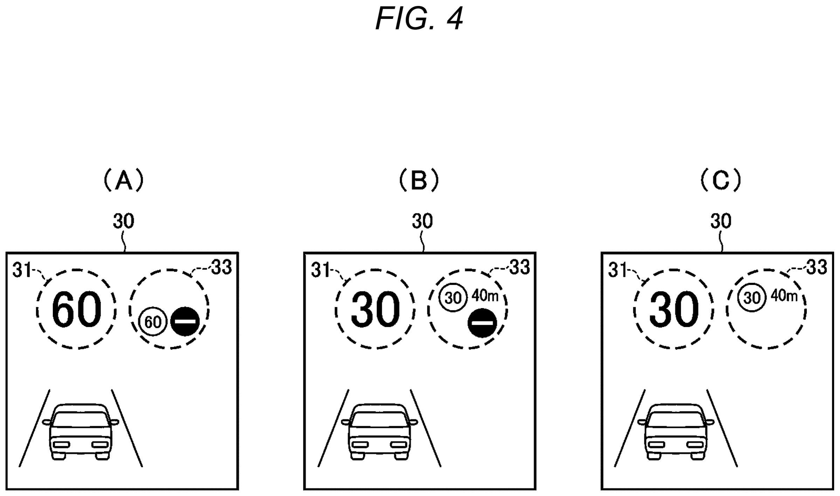

Next, an overview of traffic sign display control according to the present embodiment will be described with reference to FIG. 2. FIG. 2 illustrates a situation where the vehicle 100 is traveling on a travel road 2. FIG. 3 is camera image data at the time of entering an intersection S2. FIGs. 4(A) to 4(C) illustrate the display unit 30 at positions P1 to P3, respectively.

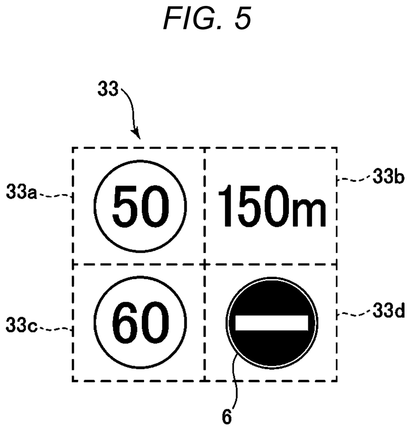

As illustrated in FIG. 4, the display unit 30 may be provided with a vehicle speed display section 31 that displays a current vehicle speed of the vehicle 100 and a sign display section 33 that displays the sign information. FIG. 5 is a view illustrating the sign display section 33.

In FIG. 2, from time t1 to t3, the vehicle 100 moves from the position P1 (t = t1) to the position P3 (t = t3) through the position P2 (t = t2). For example, a speed restriction sign 3c ("60". That is, 60 km/h) is installed or provided at a position P0, and a speed restriction sign 3d ("30". That is, 30 km/h) is installed or provided at a position P4 ahead of the position P3. In FIG. 2, the speed limit is 60 km/h in sections S1, S2 from the position P0 to the position P2, and the speed limit is 30 km/h in a section S3 from the position P2 to the position P4.

The section S2 in front of the position P2 is the intersection (see FIG. 3). Vehicle entry prohibition signs 3a and auxiliary signs 3b are installed or provided at the position P2 near the intersection. The vehicle entry prohibition signs 3a may be installed as a pair of signs on both sides of the travel road. Accordingly, by following the vehicle entry prohibition signs 3a, the vehicle 100, which has traveled from the position P1 toward the position P2, cannot enter the section S3 (an entry prohibition road) beyond the position P2.

However, in the example of FIGs. 2 and 3, a time period in which the vehicle entry prohibition signs 3a are applied is defined by the auxiliary signs 3b (that is, they are applied in a time period between 7:30 and 8:30). Accordingly, except for the designated time period, the vehicle 100 can travel in the section S3 beyond the position P2. For this reason, at the position P4, the speed restriction sign 3d is installed for the vehicle 100 that has traveled from the position P2. In the present embodiment, it is assumed that a content of regulation by the auxiliary sign 3b cannot be identified from the camera image data.

The vehicle 100 that enters the intersection S2 from the position P1 has to turn left or right at the intersection S2 in the time period in which the vehicle entry prohibition signs 3a are applied but, in a time period in which the vehicle entry prohibition signs 3a are not applied, can travel straight through the intersection S2 toward the position P3.

For example, the control unit 20 displays the current vehicle speed in the vehicle speed display section 31 on the basis of the detection signal by the vehicle speed sensor 13. The control unit 20 also displays the sign information in the sign display section 33 on the basis of the navigation information from the navigation device 12 and/or the image data from the vehicle exterior camera 11.

As illustrated in FIG. 5, the sign display section 33 may have: a display area 33a in which information on the speed restriction sign ("50" in FIG. 5. That is, 50 km/h) located closest to the front of a current position in an advancing direction on the travel road 2 is displayed; and a display area 33b in which distance information ("150 m" in FIG. 5) on a distance from the current position to the speed restriction sign is displayed. The control unit 20 acquires and displays the information on the speed restriction sign located near the vehicle 100 and the distance information e.g., from the navigation information of the navigation device 12.

As illustrated in FIG. 5, the sign display section 33 may further have: a display area 33c in which information on the speed restriction sign ("60" in FIG. 5. That is, 60 km/h) actually installed or provided along the travel road 2 is displayed; and a display area 33d in which regulation information (an entry prohibition mark 6 representing the "vehicle entry prohibition sign" in FIG. 5) other than the speed restriction sign actually installed along the travel road 2 is displayed.

For example, the control unit 20 identifies and displays the information on the actually installed speed restriction sign and the other traffic sign from the image data of the vehicle exterior camera 11. That is, the control unit 20 identifies the traffic signs (including the auxiliary sign) through image processing on the camera image data, reads, the speed restriction sign identified from these and a mark (for example, the entry prohibition mark 6) that corresponds to the other sign (for example, the vehicle entry prohibition sign 3a) from the traffic sign data stored in the storage unit 21, and displays them in the display areas 33c, 33d.

In this case, as illustrated in FIG. 4(A), at the position P1, current vehicle speed information ("60". That is, 60 km/h) is displayed in the vehicle speed display section 31, and the speed limit information ("60". That is, 60 km/h) that is identified from the image data acquired by imaging the speed restriction sign 3c installed at the position P0 is displayed in the display area 33c. In addition, vehicle entry prohibition information 6 (or the entry prohibition mark 6) that is identified from the image data acquired by imaging the vehicle entry prohibition sign 3a and the auxiliary sign 3b is displayed in the display area 33d. The display areas 33a, 33b are blank display (in a state of not being displayed).

FIG. 4(B) illustrates a situation where the vehicle 100 enters the travel road on which the vehicle entry prohibition sign 3a is installed. As illustrated in FIG. 4(B), at the position P2, the current vehicle speed information ("30". That is, 30 km/h) is displayed in the vehicle speed display section 31, and information ("30". That is, 30 km/h) on the next speed restriction sign 3d (the position P4) that is acquired from the navigation information and information ("40 m") on a distance to the next speed restriction sign 3d are displayed in the display area 33a and the display area 33b, respectively. The entry prohibition mark 6 is displayed or continuously displayed in the display area 33d. The display area 33c may be the blank display (in the state of not being displayed).

FIG. 4(C) illustrates a situation where the vehicle 100 is traveling at the position P3 between the position P2 and the position P4 and another traffic sign (the speed restriction sign 3d) installed at the position P4 is identified from the camera image data. As illustrated in FIG. 4(C), the current vehicle speed information ("30". That is, 30 km/h) is displayed in the vehicle speed display section 31, the information ("30. That is, 30 km/h) on the next speed restriction sign 3d is continuously displayed in the display area 33a, and the information ("30 m") on the distance to the next speed restriction sign 3d is displayed in the display area 33b. Since the speed restriction sign 3d is identified from the camera image data, the display of the entry prohibition mark 6, which has been displayed in the display area 33d, is terminated. The display area 33c continues to be the blank display (in the state of not being displayed).

The speed limit information and the other sign information in the display areas 33c, 33d may be displayed only for a predetermined period (for example, two to three seconds) from passing (or immediately before passing) of the identified traffic sign. However, in the present embodiment, it is configured to display or continuously display the entry prohibition mark 6 in the display area 33d until a predetermined condition is satisfied e.g., in the case where the "other sign information" is the vehicle entry prohibition information.

### [Processing Flow]

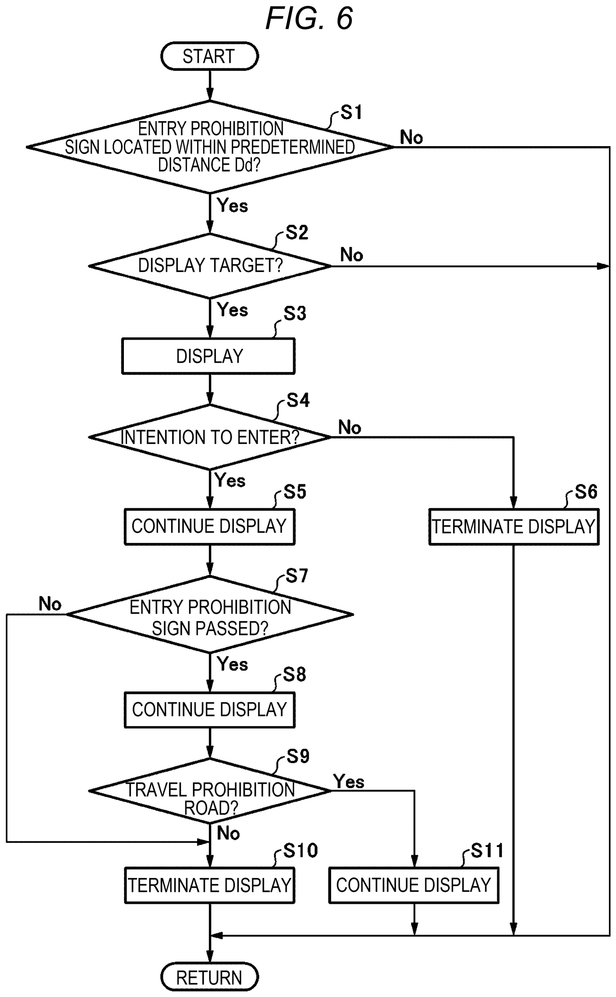

Next, a description will be made on a processing flow of the information display control system 1 in the present embodiment with reference to FIG. 6. The control unit 20 repeatedly executes this processing flow at all times. When the processing is started, the control unit 20 subjects the camera image data, which is acquired from the vehicle exterior camera 11, on the image processing, and determines whether the vehicle entry prohibition sign 3a is located within a predetermined distance Dd (S1).

In the present embodiment, when the vehicle entry prohibition sign 3a is identified from the camera image data, the control unit 20 may estimate positional information of the vehicle entry prohibition sign 3a with respect to the vehicle 100 from the camera image data. For example, this positional information includes a distance D (a sign distance) between the vehicle 100 and the vehicle entry prohibition sign 3a and/or a direction of the vehicle entry prohibition sign 3a with respect to the vehicle 100.

When the estimated sign distance D is equal to or shorter than the predetermined distance Dd (a display start distance), which may be set on the basis of the vehicle speed signal, as will be described below, the control unit 20 displays the vehicle entry prohibition information 6 in the display area 33d. The display start distance Dd is set to a larger value as the vehicle speed is increased, but is about 30 m to about 60 m, for example.

If the determination is negative (S1; No. That is, D > Dd), the vehicle entry prohibition sign 3a is located far, and thus the control unit 20 may terminate the processing. On the other hand, if the determination is positive (S1; Yes). That is, D ≤ Dd), the control unit 20 may determine whether the vehicle entry prohibition sign 3a is a sign for the vehicle 100 (S2). This processing is executed, for example, in order to prevent erroneous display of the vehicle entry prohibition information 6 about the vehicle entry prohibition sign 3a, which is installed for an oncoming lane, in the display area 33d.

In the processing of step S2, the control unit 20 may determine whether the vehicle entry prohibition sign 3a is the sign for a travel lane (an own lane) of the vehicle 100 on the basis of the positional information of the vehicle entry prohibition sign 3a as well as a road structure near the vehicle 100 and current positional information of the vehicle 100, which are based on the navigation information. For example, in the case where the travel road 2 has the oncoming lane, and the vehicle entry prohibition sign 3a is located on the oncoming lane side with respect to the vehicle 100 and is away from the vehicle 100 by a predetermined distance (for example, 6 m) or longer in a lateral direction, it is determined that the vehicle entry prohibition sign 3a is not the sign for the vehicle 100 or the own lane.

If the determination is negative (S2; No. That is, the vehicle entry prohibition sign 3a is not the sign for the vehicle 100), the control unit 20 may terminate the processing. On the other hand, if the determination is positive (S2; Yes. That is, the vehicle entry prohibition sign 3a is the sign for the vehicle 100), the control unit 20 displays the vehicle entry prohibition information 6 in the display area 33d of the display unit 30 on the basis of the identified vehicle entry prohibition sign 3a (S3), and the processing proceeds to the processing in step S4.

In the processing of step S4, the control unit 20 determines whether the vehicle 100 attempts to enter the entry prohibition road (the travel road on which the vehicle entry prohibition sign 3a is installed) on the basis of the positional information of the vehicle entry prohibition sign 3a and vehicle behavior information acquired from the vehicle behavior sensors 10 (S4). The vehicle behavior information may at least include the vehicle speed detected by the vehicle speed sensor 13 and the steering angle detected by the steering angle sensor 14. Based on the vehicle speed and the steering angle, the control unit 20 integrates the cumulative turning angle of the vehicle 100 that has turned since the predetermined time, or calculates a direction of the vehicle 100 with respect to the vehicle entry prohibition sign 3a.

For example, the predetermined time may be time at which the direction indicator is operated (that is, time at which the control unit 20 receives a right turn instruction position or a left turn instruction position from the direction indicator sensor 15), time at which the vehicle 100 approaches the vehicle entry prohibition sign 3a to a predetermined distance (for example, the distance Dd), or time at which the vehicle entry prohibition information 6 is displayed on the display unit 30.

If the cumulative turning angle becomes equal to or greater than a predetermined turning angle (for example, 45°), or if the direction of the vehicle 100 with respect to the vehicle entry prohibition sign 3a becomes equal to or greater than a predetermined angle (for example, 45°), the control unit 20 makes a negative determination (S4; No). That is, when it becomes clear that the vehicle 100 does not travel in the direction toward the vehicle entry prohibition sign 3a due to a positional relationship between the advancing direction of the vehicle 100 and the vehicle entry prohibition sign 3a, the control unit 20 makes a negative determination.

If the determination is negative (S4; No), the control unit 20 terminates the display of the vehicle entry prohibition information 6 in the display area 33d (S6), and terminates the processing. In the situation of FIG. 3, this is, for example, a case where the vehicle 100 turns right or left at the intersection S2 and does not enter the entry prohibition road S3.

In the present embodiment, for example, the right turn or the left turn of the vehicle 100 at the intersection S2 or the like is not simply determined by the operation of the direction indicator or a turning operation of the steering wheel, but is determined by the cumulative turning angle or the direction of the vehicle 100. As a result, in the present embodiment, it is possible to improve determination accuracy of not entering the entry prohibition road.

For example, in the situation of FIG. 3, there is a case where the vehicle 100 changes the lane from a left lane to a right lane immediately before the intersection S2 and then enters the entry prohibition road S3. In the present embodiment, it is possible to prevent the control unit 20 from erroneously determining that the vehicle 100 does not enter the entry prohibition road and terminating the display of the vehicle entry prohibition information 6.

On the other hand, since the control unit 20 makes the positive determination (S4; Yes) while there is a possibility of entering the entry prohibition road from the behavior of the vehicle 100, the control unit 20 continuously displays the vehicle entry prohibition information 6 in the display area 33d (S5). Next, in a situation where the vehicle 100 attempts to enter the travel road on which the vehicle entry prohibition sign 3a is installed (the entry prohibition road S3 in FIG. 3), the control unit 20 waits for the vehicle 100 to pass the vehicle entry prohibition sign 3a from the camera image data (S7). Since the vehicle entry prohibition signs 3a are installed on both of the sides of the entry prohibition road, in this processing, the control unit 20 waits until passing between the pair of the vehicle entry prohibition signs 3a.

If the vehicle 100 has passed on a side of the vehicle entry prohibition sign 3a but has not passed between the pair of the vehicle entry prohibition signs 3a (S7; No), the control unit 20 terminates the display of the vehicle entry prohibition information 6 in the display area 33d (S10), and may terminate the processing. In this case, the vehicle 100 does not enter the travel road on which the vehicle entry prohibition signs 3a are installed, but enters, for example, an adjacent travel road (not illustrated in FIG. 3).

On the other hand, if the vehicle 100 has passed between the pair of the vehicle entry prohibition signs 3a (S7; Yes), the control unit 20 displays or continuously displays the vehicle entry prohibition information 6 in the display area 33d (S8). In this situation, the vehicle 100 enters the entry prohibition road (the section S3 in FIG. 3).

Next, based on the vehicle behavior information and the camera image data, the control unit 20 determines or estimates whether the travel road on which the vehicle 100 is currently traveling is actually the vehicle entry prohibition road (S9). If the determination is positive (S9; Yes), in order to notify the driver of the current travel on the vehicle entry prohibition road, the control unit 20 may continuously display the vehicle entry prohibition information 6 in the display area 33d (S11), and terminate the processing. On the other hand, if the determination is negative (S9; No), the vehicle 100 is traveling on the travel road that is not prohibited by the traffic sign, and thus the control unit 20 may terminate the display of the vehicle entry prohibition information 6 in the display area 33d (S10), and terminate the processing.

A description will be made on a case where, in the processing of step S9, the determination is negative (S9; No) and the display of the vehicle entry prohibition information 6 is terminated. First, when identifying the different traffic sign (for example, the speed restriction sign 3d in FIGs. 2 and 3) from the vehicle entry prohibition sign 3a in the camera image data, the control unit 20 makes such a negative determination that the current travel road (for example, the section S3) can be traveled (or is not the vehicle entry prohibition road) (S9; No). That is, since the travel road (for example, the section S3) that is supposed to be the vehicle entry prohibition road is not necessarily and completely prohibited from being traveled by the vehicle 100, another traffic sign is installed on this travel road for the vehicle 100. For example, there is a case where the time period in which the vehicle entry prohibition sign 3a is applied is defined by the auxiliary sign 3b (see FIG. 2), and there is a high possibility that the driver has determined to be travelable from the auxiliary sign 3b and has entered. Thus, when the other traffic sign is identified, the control unit 20 may determine or estimate that the current travel road can be traveled.

Based on the vehicle speed by the vehicle speed sensor 13 and the steering angle by the steering angle sensor 14, the control unit 20 may integrate the cumulative turning angle of the vehicle 100 that has turned since the predetermined time. For example, the predetermined time is time at which the vehicle 100 has passed the vehicle entry prohibition sign 3a.

When the turning angle becomes equal to or greater than the predetermined turning angle (for example, 45°), the control unit 20 makes the negative determination (S9; No). That is, the control unit 20 determines that the vehicle 100 has turned right or left from the entry prohibition road S3 toward another travel road on the basis of the vehicle behavior of the vehicle 100. In the situation of FIG. 3, this is, for example, a case where the driver has erroneously caused the vehicle 100 to enter the travel prohibition road S3 but thereafter noticed the error and caused the vehicle 100 to enter the other travel road.

Alternatively, the control unit 20 may refer to the travel history data that is stored in the storage unit 21, determine whether the entry to this entry prohibition road has been made once or a plurality of times, and make a negative determination in the process of step S9 if the entry to this entry prohibition road has been made (S9; No) . That is, when it is determined from the travel history data that the entry to the entry prohibition road has been made for a predetermined number of times, it is highly likely that the driver knows that this entry prohibition road can be entered. Thus, when the travel history data includes entry history to this entry prohibition road, the display of the vehicle entry prohibition information 6 is terminated.

Further alternatively, in the case where a predetermined period has elapsed or a predetermined distance has been traveled since the entry to the entry prohibition road (for example, since passing of the vehicle entry prohibition sign 3a), the control unit 20 makes the negative determination (S9; No), and then terminates the display of the vehicle entry prohibition information 6 in the display area 33d. That is, there is a possibility that the vehicle leaves the entry prohibition section after a lapse of the predetermined period or after the travel for the predetermined distance. Thus, the display of the vehicle entry prohibition information 6 is terminated after the lapse of the predetermined period.

### [Operational Effects of Information Display Control System]

Next, a description will be made on operational effects of the information display control system 1 according to the present embodiment of the invention.

The information display control system 1 for the vehicle 100 in the present embodiment includes: the vehicle exterior camera 11 (the imaging unit) that acquires the image data acquired by imaging at least the front of the vehicle 100; the one or more vehicle behavior sensors 10 (e.g., the vehicle speed sensor 13 and the steering angle sensor 14) that detect the vehicle behavior information indicating the behavior of the vehicle 100; the control unit 20 that acquires the vehicle entry prohibition information 6 on the basis of the identified vehicle entry prohibition sign 3a when the vehicle entry prohibition sign 3a installed on the travel road 2 is identified from the acquired image data; and the display unit 30 that displays the vehicle entry prohibition information 6 acquired by the control unit 20. The control unit 20 determines whether the vehicle 100 enters the travel road 2 on the basis of the positional information of the vehicle entry prohibition sign 3a with respect to the vehicle 100 estimated from the image data and the vehicle behavior information acquired from the vehicle behavior sensors 10 when the vehicle entry prohibition information 6 is displayed on the display unit 30 (S4), and, when making the negative determination (S4; No), terminates the display of the vehicle entry prohibition information 6 by the display unit 30 (S6).

In the present embodiment configured as described above, in the case where it is determined that the vehicle 100 does not enter the vehicle entry prohibition road on the basis of the positional information of the vehicle entry prohibition sign 3a and the vehicle behavior information when the vehicle entry prohibition information 6 is displayed on the display unit 30 on the basis of the vehicle entry prohibition sign 3a, the display of the vehicle entry prohibition information 6 can be terminated. Thus, in the present embodiment, the vehicle entry prohibition information can be displayed only for an appropriate period.

In the present embodiment, for example, the vehicle behavior sensors 10 include at least the vehicle speed sensor 13 and the steering angle sensor 14. In the present embodiment configured as described above, it is possible to easily and accurately estimate the behavior of the vehicle 100 with respect to the vehicle entry prohibition sign 3a by the detection signals of the vehicle speed sensor 13 and the steering angle sensor 14.

In the present embodiment, for example, the control unit 20 calculates the turning angle at which the vehicle 100 has turned since the predetermined time on the basis of the vehicle speed detected by the vehicle speed sensor 13 and the steering angle detected by the steering angle sensor 14, and makes the negative determination (S4; No) when the turning angle is equal to or greater than the predetermined turning angle or when the direction of the vehicle 100 with respect to the vehicle entry prohibition sign 3a is equal to or greater than the predetermined angle. In the present embodiment configured as described above, it is possible to easily and accurately estimate a posture of the vehicle 100 with respect to the vehicle entry prohibition sign 3a.

In the present embodiment, for example, the predetermined time is the time at which the direction indicator of the vehicle 100 is operated, the time at which the vehicle 100 approaches the vehicle entry prohibition sign 3a to the predetermined distance, or the time at which the vehicle entry prohibition information 6 is displayed on the display unit 30. In the present embodiment configured as described above, it is possible to estimate a posture change after the vehicle 100 approaches the vehicle entry prohibition sign 3a to a certain extent.

In the present embodiment, for example, when determining that the vehicle 100 has approached the vehicle entry prohibition sign 3a to the predetermined distance Dd on the basis of the image data (S1; Yes), the control unit 20 displays the vehicle entry prohibition information 6 on the display unit 30 (S3). In the present embodiment configured as described above, when the vehicle entry prohibition sign 3a is approached to the predetermined distance Dd, the display of the vehicle entry prohibition information 6 can be started to notify the driver thereof in advance.

### [Reference Signs List]

- 1:: information display control system
- 3a:: vehicle entry prohibition sign
- 3b:: auxiliary sign
- 3c, 3d:: speed restriction sign
- 6:: vehicle entry prohibition information (entry prohibition mark)
- 10:: vehicle sensor
- 11:: vehicle exterior camera
- 12:: navigation device
- 13:: vehicle speed sensor
- 14:: steering angle sensor
- 15:: direction indicator sensor
- 20:: control unit
- 30:: display unit
- 31:: vehicle speed display section
- 33:: sign display section
- 100:: vehicle

## Claims

1. An information display control system (1) for a vehicle (100) comprising:
an imaging unit (11) that is configured to acquire image data by imaging at least front of the vehicle (100);
one or more vehicle behavior sensors (10) that are configured to detect vehicle behavior information indicating behavior of the vehicle (100);
a control unit (20) that is configured to acquire vehicle entry prohibition information (6) on the basis of an identified vehicle entry prohibition sign (3a) when the vehicle entry prohibition sign (3a) installed on a travel road is identified from the acquired image data; and
a display unit (30) that is configured to display the vehicle entry prohibition information (6) acquired by the control unit (20), wherein
the control unit (20) is configured to determine whether the vehicle (100) enters the travel road on the basis of positional information of the vehicle entry prohibition sign (3a) with respect to the vehicle estimated from the image data and the vehicle behavior information acquired from the one or more vehicle behavior sensors (10) when the vehicle entry prohibition information (6) is displayed on the display unit (30), and terminate display of the vehicle entry prohibition information (6) by the display unit (30) when making a negative determination or when the vehicle (100) does not enter the travel road.

2. The information display control system (1) according to claim 1, wherein
the one or more vehicle behavior sensors (10) at least include a vehicle speed sensor (13) and a steering angle sensor (14).

3. The information display control system (1) according to claim 2, wherein
the control unit (20) is configured to calculate a turning angle at which the vehicle (100) has turned since predetermined time on the basis of a vehicle speed detected by the vehicle speed sensor (13) and a steering angle detected by the steering angle sensor (14), and make the negative determination when the turning angle is equal to or greater than a predetermined turning angle or when a direction of the vehicle (100) with respect to the vehicle entry prohibition sign (3a) is equal to or greater than a predetermined angle.

4. The information display control system (1) according to claim 3, wherein
the predetermined time is time at which a direction indicator of the vehicle (100) is operated, time at which the vehicle approaches the vehicle entry prohibition sign (3a) to a predetermined distance, or time at which the vehicle entry prohibition information (6) is displayed on the display unit (30).

5. The information display control system (1) according to any one of the preceding claims, wherein
when determining that the vehicle (100) has approached the vehicle entry prohibition sign (3a) to a predetermined distance on the basis of the image data, the control unit (20) is configured to display the vehicle entry prohibition information (6) on the display unit (30).

6. The information display control system (1) according to any one of the preceding claims, wherein
when the control unit (20) identifies a traffic sign (3d) different from the vehicle entry prohibition sign (3a) from the image data, the control unit (20) is configured to terminate the display of the vehicle entry prohibition information (6) by the display unit (30).

7. The information display control system (1) according to claim 6, wherein
the traffic sign (3d) different from the vehicle entry prohibition sign (3a) is a speed restriction sign.

8. A vehicle comprising the information display control system (1) according to any one of the preceding claims.

9. A method of displaying information comprising:
acquiring image data by imaging at least front of a vehicle (100);
detecting vehicle behavior information indicating behavior of the vehicle (100);
acquiring vehicle entry prohibition information (6) on the basis of an identified vehicle entry prohibition sign (3a) when the vehicle entry prohibition sign (3a) installed on a travel road is identified from the acquired image data;
displaying the vehicle entry prohibition information (6) on a display unit (30);
determining whether the vehicle (100) enters the travel road on the basis of positional information of the vehicle entry prohibition sign (3a) with respect to the vehicle estimated from the image data and the vehicle behavior information when the vehicle entry prohibition information (6) is displayed on the display unit (30); and
terminating display of the vehicle entry prohibition information (6) by the display unit (30) when making a negative determination or when the vehicle (100) does not enter the travel road.

10. The method according to claim 9, wherein
the vehicle behavior information is detected by at least a vehicle speed sensor (13) and a steering angle sensor (14).

11. The method according to claim 10, wherein
the detecting vehicle behavior information includes calculating a turning angle at which the vehicle (100) has turned since predetermined time on the basis of a vehicle speed detected by the vehicle speed sensor (13) and a steering angle detected by the steering angle sensor (14), and
the negative determination is made when the turning angle is equal to or greater than a predetermined turning angle or when a direction of the vehicle (100) with respect to the vehicle entry prohibition sign (3a) is equal to or greater than a predetermined angle.

12. The method according to claim 11, wherein
the predetermined time is time at which a direction indicator of the vehicle (100) is operated, time at which the vehicle approaches the vehicle entry prohibition sign (3a) to a predetermined distance, or time at which the vehicle entry prohibition information (6) is displayed on the display unit (30).

13. The method according to any one of claims 9 to 12, wherein
when determining that the vehicle (100) has approached the vehicle entry prohibition sign (3a) to a predetermined distance on the basis of the image data, the vehicle entry prohibition information (6) is displayed on the display unit (30).

14. The method according to any one of claims 9 to 13, further comprising
when a traffic sign (3d) different from the vehicle entry prohibition sign (3a) is identified from the image data, terminating the display of the vehicle entry prohibition information (6) by the display unit (30).

15. The method according to claim 14, wherein
the traffic sign (3d) different from the vehicle entry prohibition sign (3a) is a speed restriction sign.
